# EUROPEAN PATENT SPECIFICATION

(11) **EP 0 773 375 B1**
(45) Date of publication and mention of the grant of the patent: **29.03.2000**
(21) Application number: 96112034.2
(22) Date of filing: 25.07.1996
(51) Int. Cl.: F16C 7/02

(54) **Processing method for connecting rod**
Bearbeitungsverfahren für Pleuelstange
Procédé de traitement pour bielle

(30) Priority: 08.11.1995 JP 31473995
(43) Date of publication of application: 14.05.1997
(73) Proprietor: TOYOTA JIDOSHA KABUSHIKI KAISHA, Aichi-ken 471-8571 (JP)
(72) Inventor: Ishii, Yoshikazu, Toyota-shi, Aichi-ken, 471 (JP)
(74) Representative: Tiedtke, Harro, Dipl.-Ing.

(56) References cited:
- CH-A- 300 098
- US-A- 2 031 173

## Description

### BACKGROUND OF THE INVENTION

### FIELD OF THE INVENTION

The present invention relates to a processing method for a connecting rod of an engine in applying machinery processing thereto.

### DESCRIPTION OF THE PRIOR ART

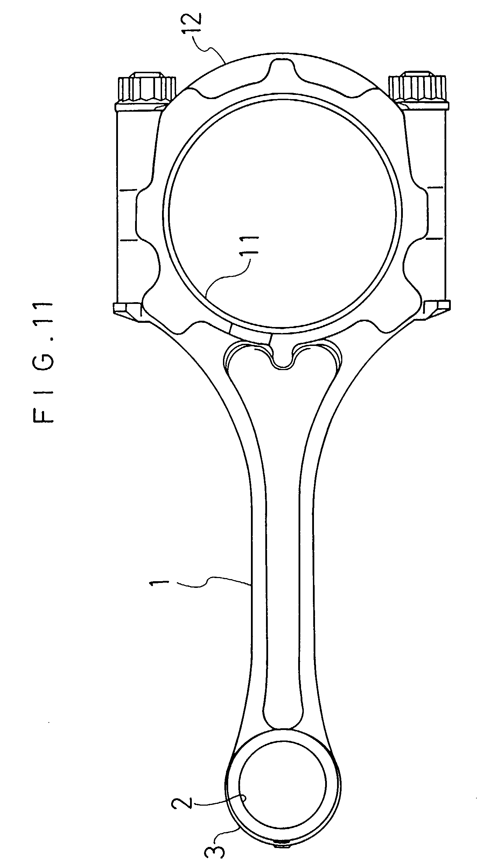

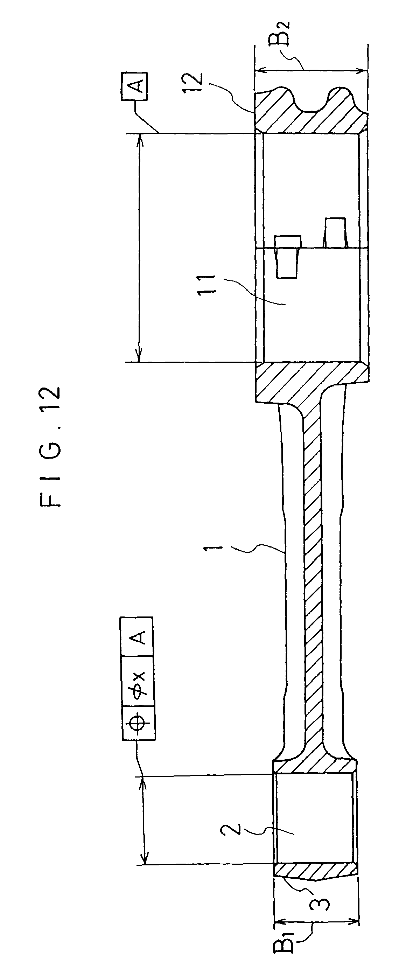

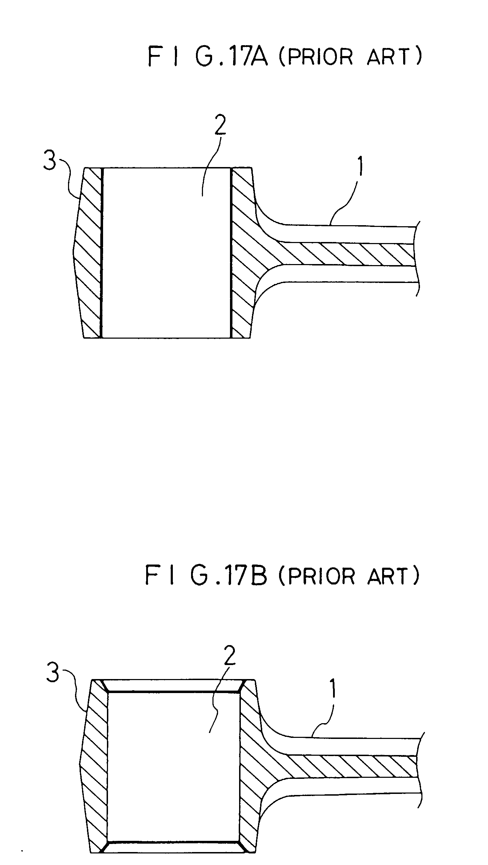

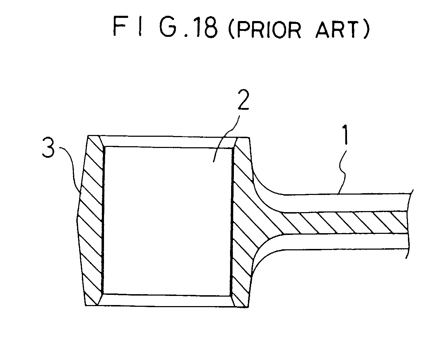

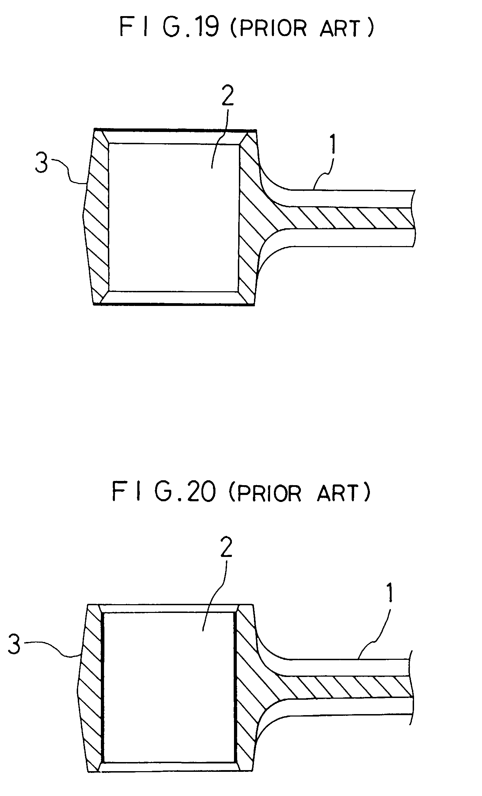

In general, a connecting rod is prepared initially roughly in shape by forging or casting, subsequently by applying machinery processing to surfaces with which the other parts are engaged to obtain a desired shape. The followings are explanations using Figs. 17 ∼ 20 for a general machinery processing for a connecting rod. Now, in Figs. 17 ∼ 20, parts indicated in thick line show the processed portions at every processing. First, at the first process shown in Fig. 17, to a small diameter hole 2 of a workpiece 1 (connecting rod), a milling processing is applied (Fig. 17A) and chamfering the edge of the small diameter hole 2 is carried out (refer to Fig. 17B). Subsequently, at the second process shown in Fig. 18, again the inner wall of the small diameter hole 2 is processed by milling, and the burs occurred during the chamfering are removed to adapt it to employ the small diameter hole 2 as a process reference hole. Further, in the third process shown in Fig. 19, by cutting the workpiece 1 at the side thereof a large or a small ends are processed in such a manner as those become an identical plane and are adapted to be able to be used as a reference plane. In addition, in the fourth process shown in Fig. 20, by said process reference hole and said reference plane, the correct positioning of the workpiece is determined and the small diameter hole 2 and the large diameter hole 11 (refer to Fig. 11) are processed simultaneously to obtain the large and the small diameter holes to satisfy the desired position and allowance. By the way, mentioning the position and allowance, it means an area (allowance area) within which a deviation is allowed from a theoretically correct position which is determined in respect to such as a point, a linear and a plane. As an example, the small diameter hole 2 and the large diameter hole 11 shown in Fig. 12 are said to satisfy the desired position and allowance, if in respect to the theoretically correct position with each other, a parallel degree, a pitch and a roundness are within the range of 0.05/100(mm/mm), ± 0.05(mm) and 0.005(mm) respectively.

In the above process, the process reference plane is formed by defining the sides of the large end 12 (Fig. 11) as an identical plane, and the position and allowance, and the dimension precision of the large diameter hole and the small diameter hole of a connecting rod are guaranteed. Accordingly, the small end 3 and the large end 12 (refer to Fig. 11) have become the ones showing automatically the same width. However, as shown in Fig. 12, if the width B₁ of the small end 3 can be small compared with the width B₂ of the large end 12, a degree of freedom of designing is increased and various advantages are derived. Accordingly, in accordance with the following processes, such proposal as forming the small end 3 in a different width from the large end 12 has been made conventionally.

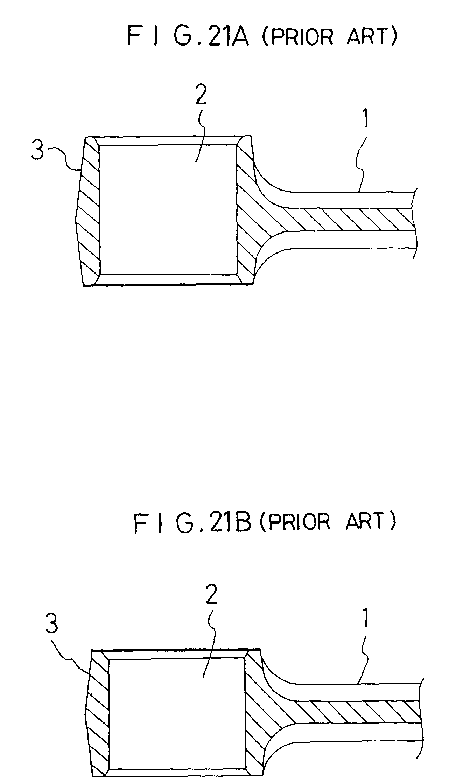

Concretely, as one first process, there is one in which, after cutting the side of the small end 3 to a desired width (B₁) in the above third process and chamfering the end of the small diameter hole 2, the fourth process is carried out. And, as another process, the following case is considered, i.e. after the processing by the first through fourth processes at fifth process as shown in Fig. 21, the cutting of the side of the small end 3 and the chamfering are carried out.

However, there are the following problems in the above processes by which the connecting rods of the above large and small ends having different width are obtained. First, when cutting the small end 3 to a desired width in the third process, the configurations of the sides of the large and small ends of the connecting rods are formed in a stepped figure, so that as a processing jig at the time of the simultaneous working of the large and the small diameter holes, a jig for working having the step faces corresponding to the stepped figure is needed to be used. However, the plays between the step faces of the working jig and the stepped configurations of the connecting rod are apt to occur due to the dispersion of the working precision, and it has become impossible to guarantee the position and allowance of the large and the small diameter holes. Further, since at the third process the widths of the large and the small ends become different, the processing apparatus at the fourth process is needed to be settled differently from the one in which the widths of the large end and the small end are identical, and eventually it has become impossible to flow the group of the connecting rod having same width in the large and small ends and the group of connecting rod having different widths at random on the same working line. Which has caused to increase the cost.

Further, in the fifth process in which the small end 3 is cut to a desired width in the 5th process, a process reference plane is provided by processing the large end and the small end of a connecting rod to an identical plane, so that it is possible to process the large and the small diameter holes which satisfy the position and allowance as desired, but since, in the 5th process, the small diameter hole 2 is chamfered after cutting the side of the small end, burs 13 between the intersection of the portion 2a to be chamfered and the small diameter hole 2 are generated to deteriorate the dimension precision of the small diameter hole 2.

### SUMMARY OF THE INVENTION

The present invention is made in the light of the above problems, the object thereof is to manufacture easily a connecting rod having different widths of the large and the small ends satisfying the desired values of the position and allowance of the large and the small diameter holes and the dimension precision.

In the method of the present invention to solve the above problems and to process a connecting rod wherein, by applying a provisional process to the small diameter hole and the side thereof, a process reference hole and a process reference plane are formed, and the subsequent process is progressed by using said reference hole and said reference plane and the large diameter and the small diameter holes are formed in a desired value, in the preceding process prior to finishing said small diameter hole, forming a chamfered portion on the small diameter hole and at the finishing process cutting the small end to a desired width to provide the different width of the large end and the small end are carried out.

In the present invention, in a preceding process prior to the finishing process of the small diameter hole, a chamfering process to the small diameter hole is applied, and the burs generated at the time of said chamfering process are removed at the finishing process. Further, since the process for cutting the small end to a desired width is carried out at the final process, until one process prior to the final process, the identity of the plane of the side of the large end and the small end of the connecting rod is kept, so that it can be used as a process reference plane.

### BRIEF DESCRIPTION OF THE DRAWINGS

Fig. 1A shows a first process for making a connecting rod in milling process of the small diameter hole in the embodiment of the present invention.

Fig. 1B shows a manner of chamfering process in the first process.

Fig. 2 shows a second process for making a connecting rod in the embodiment of the present invention.

Fig. 3 shows a third process for making a connecting rod in the embodiment of the present invention.

Fig. 4 shows a fourth process for making a connecting rod in the embodiment of the present invention.

Fig. 5A shows a final process for making a connecting rod in the embodiment of the present invention in cutting process of one side.

Fig. 5B shows a final process for making a connecting rod in the embodiment of the present invention in cutting process of the other side.

Fig. 6 shows the side of a tool used for milling process for use of chamfering in the first process for making a connecting rod shown in Fig. 1 and a sectional view of the small end of the connecting rod.

Fig. 7 shows a front view of the milling tool shown in Fig. 6.

Fig. 8 shows a sectional view where a mechanical processing as a first process is applied to the small diameter hole of the connecting rod shown in Fig. 1.

Fig. 9 shows a side of a cutting tool used in the final process in the process method for making a connecting rod shown in Fig. 5, and a sectional view of the connecting rod.

Fig. 10 is a front view of the cutting tool shown in Fig. 9.

Fig. 11 is a front view of the connecting rod made in this embodiment of the present invention.

Fig. 12 is a sectional view of the connecting rod shown in Fig. 11.

Fig. 13A shows a front view of a small end of a conventional connecting rod.

Fig. 13B shows a side view of a small end of a conventional connecting rod.

Fig. 14A shows a front view of the small end of a connecting rod according to the embodiment of the present invention.

Fig. 14B shows a side view of the small end of a connecting rod according to the embodiment of the present invention.

Fig. 15 shows, in a conventional processing method, a variation of the straightness of the small diameter hole in pre- and post shrinkage of the width of the small end.

Fig. 16 shows, in a present invention, a variation of the straightness of the small diameter hole in pre- and post shrinkage of the width of the small end.

Fig. 17A shows the first process in a conventional processing of a connecting rod, wherein the small diameter hole is milled.

Fig. 17B shows the first process in a conventional processing of a connecting rod, wherein the chamfering is carried out.

Fig. 18 shows the second process in a conventional processing of a connecting rod.

Fig. 19 shows the third process in a conventional processing of a connecting rod.

Fig. 20 shows the fourth process in a conventional processing of a connecting rod.

Fig. 21A shows a processing of one side of the small end according to the fifth process after the fourth process of a connecting rod shown in Fig. 18.

Fig. 21B shows a processing of another side of the small end according to the fifth process after the fourth process of a connecting rod shown in Fig. 18.

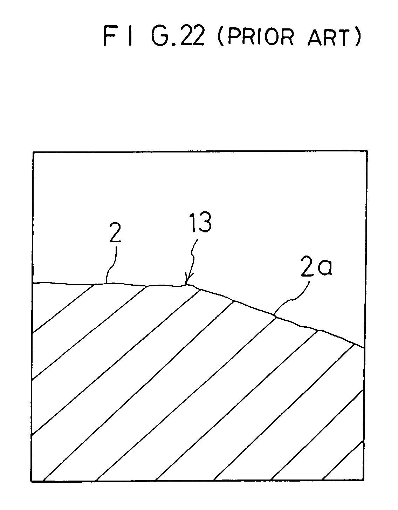

Fig. 22 shows burs generated at the time of the fifth process shown in Fig. 19.

### EMBODIMENT

Hereinafter, the preferred embodiment of the present invention will be explained based on the attached drawings. In the drawings, the portions identical with the conventional arts or corresponding portions are indicated in the same reference numerals and a detailed explanation is omitted.

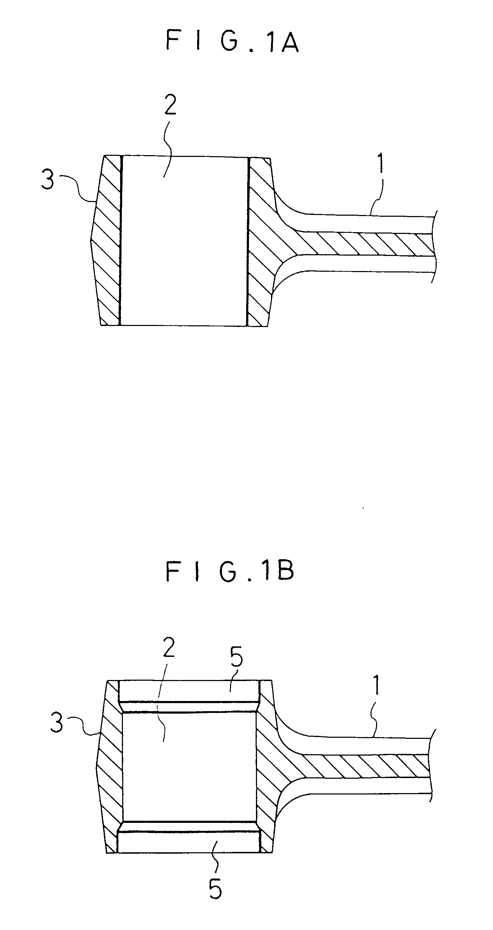

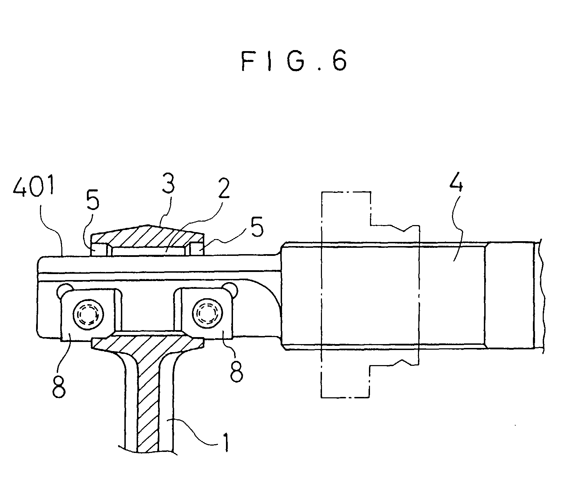

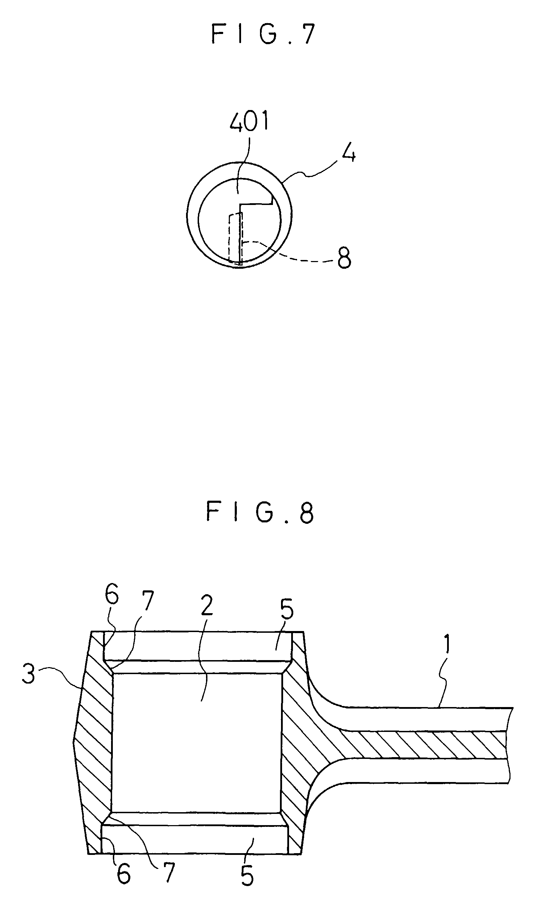

In Figs. 1 - 5, a processing for a connecting rod is described. In which, a thick line shows the processed portions of each process. First, in the first process shown in Fig. 1, a milling is applied to the small diameter hole 2 of the workpiece 1 (connecting rod) (refer to Fig. 1A). Further, in this first process, a deep spot facing 5 is applied to the small diameter hole 2 (Fig. 1B) as shown in Fig. 8 using a milling tool 4 as shown in Figs. 6 and 7. This deep spot facing 5 is formed with an annular tapered surface 7 on a tip end of a straight portion 6 having a certain diameter and is adjacently continued to the inner wall of the small diameter hole 2. The milling tool 4 is eccentric in respect to the rotation center of the milling tool 4 with the tip end 401 as shown in Figs. 6 and 7, and on the tip end 401, a stepped tip 8 is mounted. When inserting the milling tool 4 into the small diameter hole 2 for processing, in order to avoid the edge of the blade of the stepped tip 8 from contacting to the inner wall of the small diameter hole 2, a head of the rotation shaft (not shown) to support the milling tool 4 is moved in such a manner as the shaft of the tip end 401 and the shaft of the small diameter hole become concentric. And, when the milling is actually initiated, the tip end 401 is moved, the stepped tip 8 is made to contact the inner wall of the small diameter hole 2 and the deep spot facing 5 is formed simultaneously at both ends of the small diameter hole 2, and eventually two mutual positions of the axially tapered faces are guaranteed.

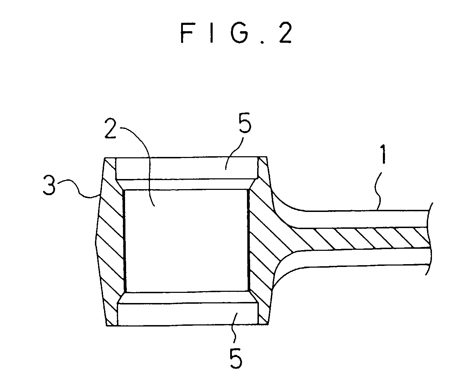

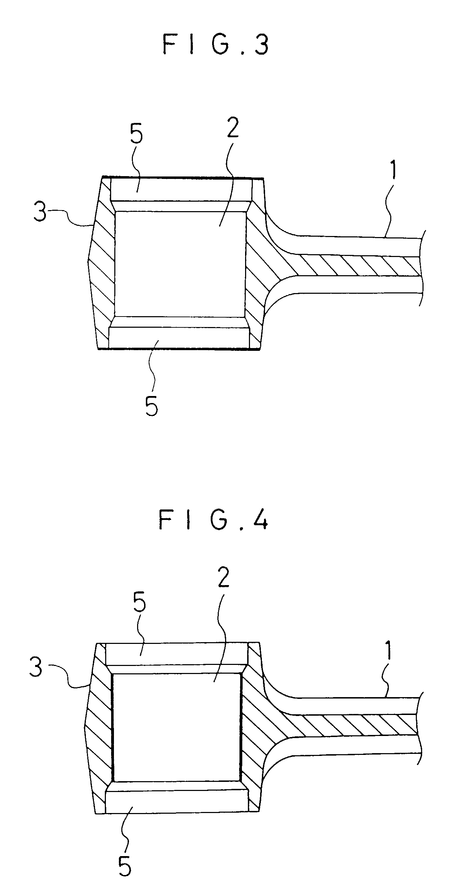

Next, in the second process shown in Fig. 2, again the small diameter hole 2 is processed by milling, a processing for removing any bur generated on the inner wall of the small diameter hole 2 when forming the deep spot facing 5 is carried out to make possible to use the small diameter hole as a process reference hole. And, in the third process shown in Fig. 3, the side of the workpiece 1 is cut so as to make the large end and the small end of the connecting rod an identical plane and be able to be used as a process reference plane. Further, in the fourth process shown in Fig. 4, a correct positioning is carried out based on the processing reference hole and the processing reference plane, a simultaneous processing for the small diameter hole 2 and the large diameter hole 11 (refer to Fig. 11) is done and a finishing process is applied to the inner walls of the small diameter hole 2 and the large diameter hole 11 in such a manner as the desired position and allowance are satisfied.

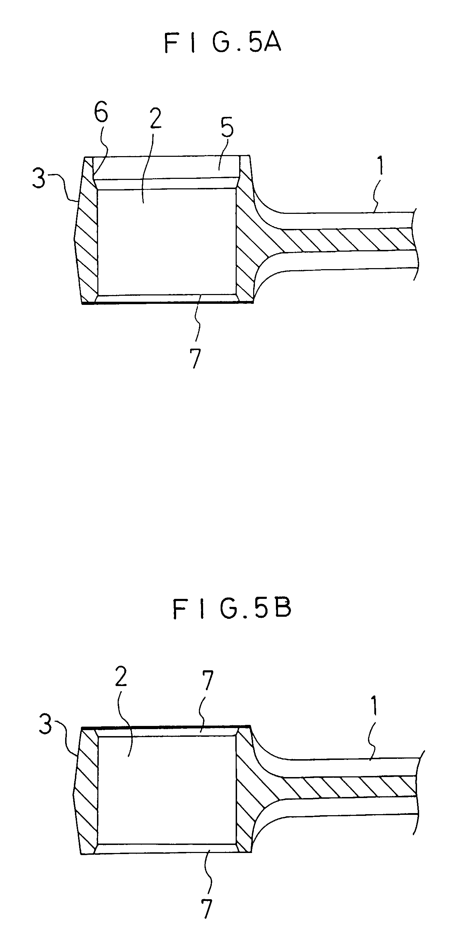

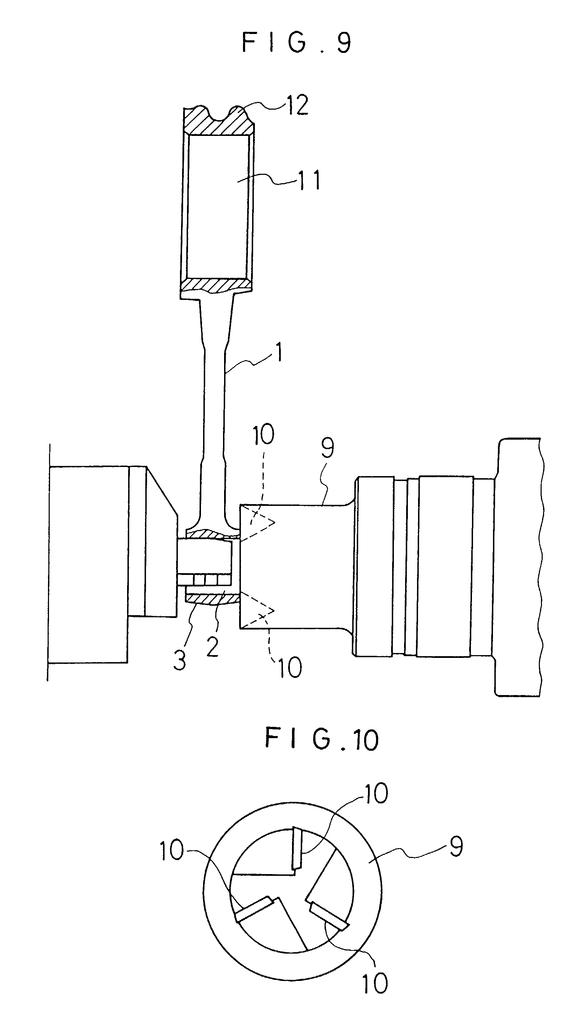

And, in the fifth process shown in Fig. 5 (final process), both sides of the small end 3 are cut, and the straight portion 6 of the deep spot facing 5 formed in the first process is removed to expose the tapered surface 7 to the side of the small end 3. That is, the tapered surface 7 becomes at this moment the chamfered portions of both ends of the small diameter hole 2. The tool to be used in this final process is the cutting tool 9 as shown in Figs. 9 and 10. This tool 9 is mounted on the tip end with chips 10, and each chip 10 is aligned toward the rotational direction of the cutting tool 9. And, when the cutting tool 9 is rotated and pushed on the side of the small end 3 to cut the portion along the cylindrical side of the small end with its chips 10. That is, since the chips 10 do not cut the portion in such a transversal direction as the burs are apt to be generated, the burs generation are prohibited.

According to the above processing order there is provided, as shown in Figs. 11 and 12, a connecting rod having large and small diameter holes which satisfy the desired position, degree and allowance and large and small ends having different widths (B₁, B₂).

The effects to be obtained from the embodiment of the present invention are as follows. To form a deep spot facing 5 in the small diameter hole 2 using a milling tool 4 in the first process and to use finally the tapered face 7 of the deep spot facing 5 as a chamfering portion of the small diameter hole 2. That is, at the first process prior to finishing process of the small diameter hole, the tapered face 7 is formed which corresponds to the chamfered configuration of the small diameter hole 2, so that the burs which are generated at the time of forming the tapered face 7 have been completely removed when the finishing process (the fourth process) is carried out to prevent the dimension precision of the small diameter hole 2 from being deteriorated.

Further, since the processing for shortening the width of the small end 3 to a given value is carried out with the final process, to the fourth process the identical planeness of the sides of the large and the small ends is kept and can be used as the processing reference face. Accordingly, it becomes possible to carry out the exact positioning of the workpiece 1 at the fourth process, to process simultaneously the small diameter hole 2 and the large diameter hole 11 (refer to Fig. 11) and to form these in such a manner as satisfying the given position, degree and allowance. Further, to the fourth process the two kinds of connecting rods having the same width with respect to the large and the small ends and the different width can be flowed for processing at random on an identical processing line, by which the different connecting rods in shape are manufactured without increasing the cost thereof.

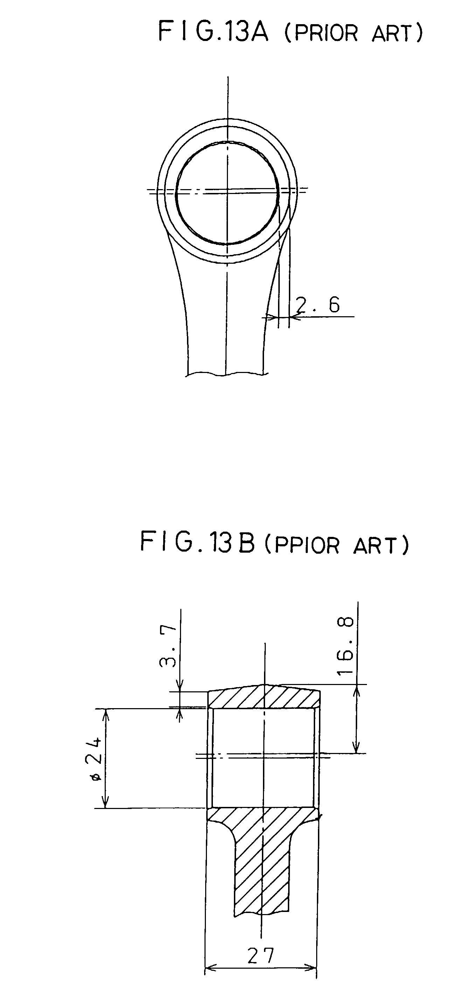

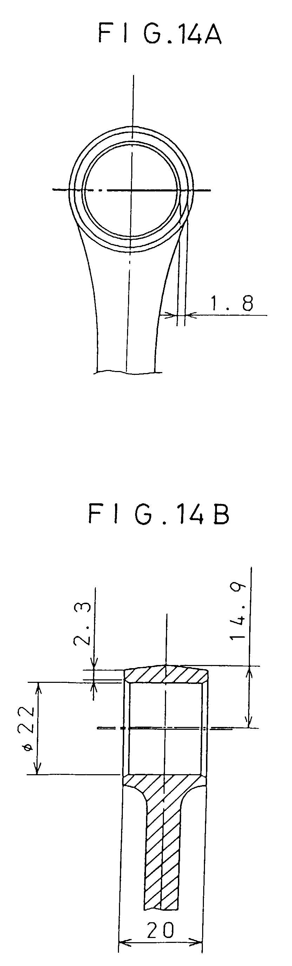

Thus, according to the above processing, to the small end of the conventional connecting rod as shown in Fig. 13, its width can be processed to a small dimension (from 27 mm to 20 mm) as shown in Fig. 14. In addition, if the thickness of the material which forms the small end can become thin (from 2.6 mm in Fig. 13A to 1.8 mm in Fig. 14A), the miniaturization and the weight-saving of the small end is more promoted. However, if such tendency is promoted, the rigidity thereof is decreased, and at the time of cutting process of the small end in the final process, there occurs an anxiety of the deformation of the small diameter hole as a whole. However, in the above first process in the embodiment, a deep spot facing 5 is formed in the small diameter hole 2 (see Fig. 1), and the thickness of the material of the portion to be cut and removed at the final process is thin (see Fig. 5), so that the cutting resistance at the time of cutting the side of the small end becomes small to avoid the deformation of the small diameter hole.

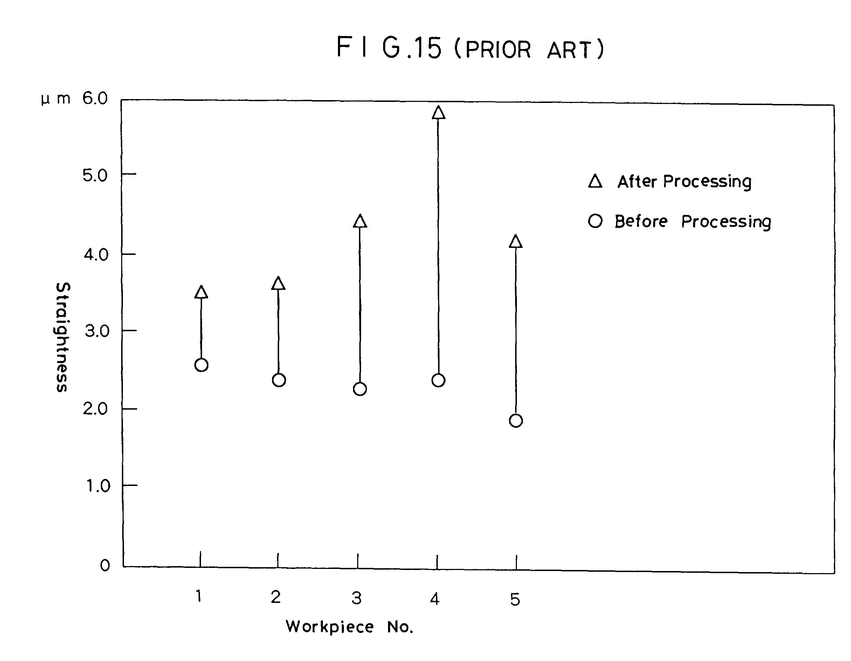

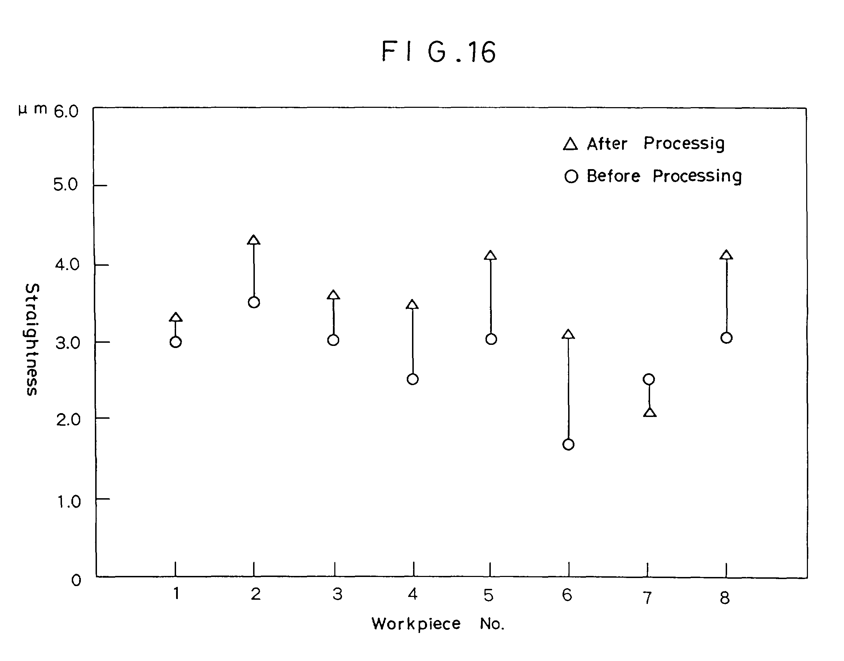

Here, the change of the straightness of the small diameter hole before and after processing the shortening of the width of the small end is shown in Figs. 15 and 16, in which, one case where after the conventional processing in order the width shortening processing of the small end is carried out (see Figs. 17 - 21) and the other case where based on the above processing of the embodiment the width shortening processing of the small end is carried out (see Figs. 1 - 5) are compared. It is obvious that the deterioration of the straightness of the small diameter hole becomes small before and after the processing comparing the value shown in the Fig. 16 based on the embodiment of the present invention with the value shown in Fig. 15 based on the conventional processing. Accordingly, according to the above embodiment, it becomes possible to make thin the thickness of the material of the portion to be formed as the small diameter hole compared with the conventional one, to attain the miniaturization and the weight-saving of the small end sufficiently. Thereby, the freedom of designing of an engine is increased accordingly.

The present invention is thus formed, the following effects are expected. When forming the connecting rod having the different widths of the large and the small ends, at the preceding process prior to the finishing process of the small diameter hole, the burs generated at the forming process of chamfering to the small diameter hole are completely removed at the time of finalizing the finishing process of the small diameter hole, thereby there is no influence of such burs and so that the dimension of precision of the small diameter hole is guaranteed. Further, by cutting the small end to a given width at the final process to make the connecting rod, the position and allowance of the large and the small diameter holes are guaranteed, because there has already been a process reference face at the time when the large and the small diameter holes are processed simultaneously. Still further, since to the preceding process prior to the final process the widths of the large and the small ends are identical, it is possible to flow the connecting rods having the same width and those having the different width of the large and small ends on the identical line at random, without increasing the cost the connecting rods having the different configuration can be manufactured simultaneously.

Forming a process reference hole and a process reference plane by applying provisional processes to a small diameter hole 2 and to a side of a connecting rod 1, and simultaneously finishing the small diameter hole 2 and the large diameter hole using said process reference hole and the process reference plane to guarantee a position and allowance of the large and the small diameter holes. Further, at the time of applying the process to make the small diameter hole 2 as the process reference hole, a deep spot facing 5 is formed.When cutting the small end 3 to a given width at a final mechanical process, one portion of the deep spot facing 5 is exposed to become a chamfered portion of the small diameter hole 2. Further, at the final process, the processing where on an inner wall of the small diameter hole burs are generated is not carried out to deteriorate the dimension precision.

## Claims

1. A method of processing a connecting rod, (1) having a large end (12) and a small end (3) having different widths (B₁, B₂), comprising the steps of :
- applying a provisional processing to a small diameter hole (2) and a side of the connecting rod to form a process reference hole and a process reference plane,
- by making use of said process reference hole and said process reference plane progressing a subsequent process to form a large diameter hole (11) and a small diameter hole (2) to satisfy a given position and allowance,
- forming a shape of chamfering (7) in the preceding process prior to a finishing process of the small diameter hole (2), and
- cutting the small end (3) in a final process to a given width (B₁) to provide the large end (12) and small end (3) having different widths (B₁, B₂).

## Patentansprüche

1. Verfahren zum Bearbeiten einer Pleuelstange (1) mit einem großen Ende (12) und einem kleinen Ende (3) mit unterschiedlichen Breiten (B1, B2) mit den folgenden Schritten: Anwenden einer provisorischen Bearbeitung einer Öffnung (2) mit kleinem Durchmesser und einer Seite der Pleuelstange zum Bilden einer Prozeßreferenzöffnung und einer Prozeßreferenzebene
durch Verwenden der Prozeßreferenzöffnung und der Prozeßreferenzebene Fortschreiten eines folgenden Prozesses zum Bilden einer Öffnung (11) mit großem Durchmesser und einer Öffnung (2) mit kleinem Durchmesser zum Erfüllen einer gegebenen Position und Toleranz
Bilden einer Form der Fase (7) bei dem vorangegangenen Prozeß vor einem Endprozeß der Öffnung (2) mit kleinem Durchmesser, und
Schneiden des kleinen Endes (3) bei einem Endprozeß zu einer gegebenen Breite (B1) zum Schaffen des großen Endes (12) und kleinen Endes (3) mit unterschiedlichen Breiten (B1, B2).

## Revendications

1. Un procédé d'usinage d'une bielle de liaison (1) comportant une extrémité large (de tête) (12) et une extrémité étroite (de pied) (3) présentant des largeurs différentes (B₁, B₂) comprenant les étapes consistant :
- à appliquer un usinage provisoire à un alésage de petit diamètre (2) et à une face de la bielle de liaison pour former un alésage de référence d'usinage et un plan de référence d'usinage,
- à utiliser ledit alésage de référence d'usinage et ledit plan de référence d'usinage pour faire progresser un usinage subséquent pour former un alésage de grand diamètre (11) et un alésage de petit diamètre (2) pour satisfaire à une position et à des tolérances données,
- à réaliser la forme du chanfrein (7) dans l'usinage précédent avant un usinage de finition de l'alésage de petit diamètre (2), et
- à usiner en tronçonnage l'extrémité étroite (de pied) (3) au cours d'un processus final à une largeur donnée (B,) pour obtenir l'extrémité large (de tête) (12) et l'extrémité étroite (de pied) (3) présentant des largeurs différentes (B₁, B₂).
